# EUROPEAN PATENT SPECIFICATION

(11) **EP 3 072 860 B1**
(45) Date of publication and mention of the grant of the patent: **20.07.2022**
(21) Application number: 15171053.0
(22) Date of filing: 08.06.2015
(51) Int. Cl.: C04B 28/34, C04B 41/00, C04B 41/50, C04B 41/67, C04B 111/00

(54) **PHOSPHATE-BASED CERAMIC COATINGS COMPRISING POROUS PARTICLES**
PHOSPHATBASIERTE KERAMISCHE BESCHICHTUNGEN MIT PORÖSEN TEILCHEN
REVÊTEMENTS EN CÉRAMIQUE À BASE DE PHOSPHATES COMPRENANT DES PARTICULES POREUSES

(30) Priority: 27.03.2015 EP 15161379
(43) Date of publication of application: 28.09.2016
(73) Proprietor: Fritz Egger GmbH & Co. OG, 6380 St. Johann in Tirol (AT)
(72) Inventor: SCHIEGL, Walter, 6380 St. Johann i.T. (AT); LEENDERTSE, Krijn, 5294 BM Den Haag (NL); JOZIC, Robert-Jan, 2495 AA Den Haag (NL)
(74) Representative: Cohausz & Florack

(56) References cited:
- EP-A1- 0 310 138
- EP-A1- 2 159 208
- WO-A1-97/19033
- WO-A1-2015/023660
- WO-A2-2005/047746
- WO-A2-2011/072262
- CN-A- 101 973 750
- GB-A- 1 387 719
- GB-A- 2 186 277
- US-A- 2 465 247
- US-A- 3 248 249
- US-A- 5 948 314
- US-A1- 2002 009 622
- US-A1- 2004 086 730
- US-A1- 2013 196 137
- ZHUKOV, A.V.: "reaction of phosphate binders with perlitic aggregate and clay in the hardening of perlite phosphate", CHEMICAL ABSTRACTS, vol. 85, no. 6, 36703A, 9 August 1976 (1976-08-09), page 250, XP000185812, sb. Tr., Mosk. Inzh.-Stroit. Inst. ISSN: 0009-2258

## Description

### Field of the Invention

The invention relates to phosphate-based ceramic coatings comprising porous particles. Moreover, the present invention relates to a method for coating a substrate with such a coating, a laminate comprising a layer of such a coating and a protective layer, as well as products comprising such coatings and/or laminates. The invention further concerns practical uses of such phosphate-based ceramic coatings comprising porous particles, in particular to provide for fire protection and/or insulation.

### Background of the Invention

Given the continuous efforts to improve building safety and energy conservation, building elements used in the construction industry, such as elements for roofs, ceilings and/or facades, need to meet highest standards of insulation and fire resistance today.

A particularly representative building element in this context are structural insulated panels (SIPs). These are composite building materials comprising an insulating layer of rigid core sandwiched between two layers of structural board. The board can be sheet metal, plywood, cement, magnesium oxide board (MgO) or oriented strand board (OSB). The core can be extruded polystyrene (XPS), expanded polystyrene (EPS), polyurethane (PUR), polyisocyanurate (PIR), or phenolic foam. SIPs are most commonly made of Oriented Strand Board (OSB) or chipboard panels sandwiched around a foam core made of expanded polystyrene (EPS), extruded polystyrene (XPS) or rigid polyurethane foam.

Wood and wood-based products such as the above-mentioned OSB or chipboard panels are important building materials. However, they need to be impregnated or coated with fire-retardent materials to yield fire-resistant products.

Insulation and fire-resistant properties are not easily achieved simultaneously. It is therefore common practice in the construction industry to use insulation foam cores on the one hand, and impregnate or coat outer surfaces of building elements with fire-resistant coatings on the other hand.

Against this background, it is desirable to combine both fire-resistant and insulation properties in a single composite material that can easily be applied onto existing building elements, in particular in the form of a thin and even layer of coating.

Examples of prior art fire-resistant coatings include phosphate-based ceramic coatings. These are, e.g., described in WO 2011/072262 A2, US 2002/0009622 A1 and WO 2008/054837 A2. Prior art phosphate-based ceramic coatings have the disadvantage that they are not well sprayable, tend to disintegrate and/or fail to provide thin and even layers of coating. In addition, whereas phosphate-based ceramic coatings provide good fire-resistance to the underlying base materials, they are not particularly good insulators.

CN101973750 describes an inorganic heat insulating material and a preparation method thereof. US 2 465 247 A describes compositions for and a method of producing phosphate films on metals. EP 2 159 208 A1 describes a heat insulator comprising a heat insulation body, which is glued on a lower base and consists of silicic acid and/or a silicate partially coated with a coating that consists of a mixture of aluminum phosphate with silicic acid and/or silicate. WO 2005/047746 A2 describes a curable coating composition for forming a thermal insulating layer comprising inter alia highly porous particles of a material obtained by drying a wet sol-gel. US 5 948 314 A describes a composition containing an aerogel, a method of producing said composition and the use thereof. US 3,248,249 describes an inorganic coating and bonding composition with high heat and corrosion resistance.

Most insulation materials available in the prior art cannot be successfully incorporated into prior art fire resistant coatings without negatively impacting on the achievable thinness of the layers, the sprayability of the coating and/or the surface properties of the obtained coating.

It is an object of the invention to overcome these disadvantages of the prior art.

It is a further object of the invention to provide a coating that can be applied by spraying that overcomes these disadvantages of the prior art.

It is a further object of the invention to provide a coating that shows further improved fire resistance.

It is a further object of the invention to provide a coating that combines both fire-resistant and insulation properties.

According to other objects of the invention, said coating shall
- be applicable by spraying in thin layers,
- have a smooth and/or even surface,
- be substantially scratch proof,
- have a surface that can be painted and/or plastered without further treatment,
- have a surface that can be sawn, drilled, and processed in the same manner and with the same tools as surfaces of structural insulated panels known in the art,
- have a surface that has an improved E-modulus and/or tensile strength when applied to, e.g., a particle board.

### Description of the Invention

The invention provides a phosphate-based ceramic coating comprising porous particles according to claim 1, a method for coating a substrate with a phosphate-based ceramic coating comprising porous particles according to claim 6, a laminate according to claim 9, the further products according to claim 12 and the uses of these according to claim 13. Further features are described in the dependent claims and herein below.

The invention described herein provides phosphate-based ceramic coating comprising porous particles which are selected from expanded perlite particles and a mixture of expanded perlite particles and aerogel particles. The chemical composition and method of manufacture of the phosphate-based ceramic coating comprising porous particles according to the invention is principally based on the prior art coatings and methods of manufactures described, e.g., in WO 2011/072262 A2, US 2002/0009622 A1 and WO 2008/054837 A2. However, the coatings of the invention are improved in composition over these prior art coatings regarding the sprayability of the composition and the surface properties of the coating. According to the invention, the phosphate-based ceramic coating containing porous particles has been sprayed.

The porous particles of the invention are selected from expanded perlite particles and a mixture of expanded perlite particles and aerogel particles that are comprised as necessary components in the phosphate-based ceramic coatings according to the invention. These particles bestow the phosphate-based ceramic coatings comprising porous particles of the invention with remarkable insulation and fire resistance properties. In addition, it has surprisingly been found that inclusion of the porous particles of the invention in the phosphate-based ceramic coatings comprising porous particles according to the invention results in an increased flexibility of the coating. This is a very useful property for many applications, in particular if the coating is applied to a base material that needs to show a certain degree of flexibility and/or resistance to vibrations and concussions.

### Porous Particles

As used herein, "porous particles" refers to particles made of a material comprising a porous structure. Porous means comprising open- and/or closed cell pores. The porous particles consist of an inorganic material or are made up of at least 90 wt-%, 95 wt-% or 99 wt-% of an inorganic material, based on the weight of the porous particles. According to a further embodiment, the porous particles comprise at least 50 wt-%, 55 wt.-%, 60 wt-%, 70 wt-% or 80 wt-% SiO₂, based on the weight of the porous particles.

The porous particles preferably are highly fire-resistant, with melting points above 1000 °C.

A useful parameter for characterizing the porous particles of the invention is by way of their bulk densities. This is the mass of the particles divided by the volume they occupy that includes the space between the particles. Bulk densities as referred to herein are measured in accordance with DIN ISO 697. According to a preferred embodiment of the invention, the porous particles have a bulk density according to DIN ISO 697 of 1 - 300 kg/m³ (1 kg/m³ = 1 g/l), preferably, from 30-270, 50-220 or 90-190 kg/m³.

Particularly good results are obtained when the porous particles are selected from expanded perlite particles or a mixture of expanded perlite particles and aerogel particles which is a requirement according to claim 1.

According to the invention, the porous particles have small particle sizes in the range of 2 µm to 700 µm. The lower endpoint of the particle size range is 2 µm, preferably 10 µm or 100µm. The upper endpoint of the particle size range is 700 µm, preferably 500 µm. Any of these lower and upper endpoints can be combined to form preferred particle size ranges according to the invention. Accordingly, the aerogel particles of the invention can have a mean particle size of from 2 µm, 10 µmor 100µm up to 700 µmor 500 µm. Disclosed but not claimed is the upper endpoint of the particle size range of 1,5 mm or 1,2 mm. Disclosed but not claimed is the mean particle size of the aerogel particles of from 2 µm, 10 µmor 100 µm up to 1,5 mm or 1,2 mm.

In the present patent application, particle sizes given refer to mean equivalent diameters. The equivalent diameter of a nonspherical particle is understood to mean the diameter of the sphere with the same volume as the particle. The mean equivalent diameter is the mean value by volume of the equivalent diameters of a population of particles. For particles having a size of less than 2 mm, this mean equivalent diameter can be experimentally determined, e.g., by laser particle size determination. However, other reliable and precise particle size measurement methods known in the art can also be used.

### Expanded Perlite

According to the invention, the porous particles are selected from expanded perlite particles or a mixture of expanded perlite particles and aerogel particles.

"Perlite" is an industrial mineral. Perlite is used as generic term to refer to naturally occurring, siliceous volcanic glass rocks containing between two and six percent of combined water. The distinguishing feature which sets perlite apart from other volcanic glasses is that when heated to a suitable point in its softening range, it expands from four to twenty times its original volume. This permits the production of an expanded cellular material of extremely low bulk density (so-called "expanded perlite"). For more information, see Barker and Santini: "Perlite" in "Industrial minerals and rocks" (2006), pp. 685-702.

The expansion process is due to the presence of two to six percent combined water in the crude perlite rock. When quickly heated to its softening temperature, typically above 800°C, the crude rock pops as the combined water vaporizes and creates countless tiny bubbles in the heat softened glassy particles. It is these tiny glass-sealed bubbles which account for the remarkable light weight (low bulk density) and other exceptional physical properties of expanded perlite. The expansion process also creates another one of perlite's distinguishing characteristics: its white color. While the crude perlite rock may range from transparent to light gray to glossy black, the color of expanded perlite generally ranges from snowy white to grayish white.

There is virtually no demand for raw perlite, other than for producing expanded perlite. In one embodiment, perlite, as used herein, refers to any volcanic rock that expands. This, e.g., includes obsidian (<2 wt % water), bloated in Japan, and pitchstone (>5 wt % water), expanded in Eastern Europe.

According to a preferred embodiment, expanded perlite, as used herein, is characterized by the following composition (in mol-%):
- 65-80 % SiO₂,
- 8-15 % Al₂O₃,
- 1-7 % K₂O,
- 1-5 % Na₂O, and
- further components.

The further components usually comprise TiO₂, Fe₂O₃, CaO, MnO, and/or MgO, which may be present in amounts of below 2 % each.

### Aerogel

According to the invention, the porous particles are selected from expanded perlite particles or a mixture of expanded perlite particles and aerogel particles.

As used herein, the term "aerogel" refers to a highly porous material of low density, which is prepared by forming a gel and then removing liquid from the gel while substantially retaining the gel structure. Aerogels have open-celled microporous or mesoporous structures. Typically, they have pore sizes of less than 200 nm and surface areas of greater than 100 m² / g. They often have low densities, e.g., from 200 kg/m³ down to as little as 1 kg/m³. Preferred aerogels according to the invention have a surface area of greater than 200 m² / g, greater than 300 m² / g, greater than 400 m² / g or greater than 500 m² / g. Further preferred are aerogels with a surface area of from 500 to 1000 m² / g, in particular 550 to 850 m² / g. Preferably, the particle density of the aerogel particles is from 90-200 kg/m³, in particular from 110-190 kg/m³. Further preferred according to the invention are aerogels with pore sizes of less than 180 nm, in particular less than 150 nm, less than 100 nm or less than 50 nm.

As used herein, "surface area" means BET surface area which can be measured according to DIN ISO 9277. Particle densities stated herein are bulk densities, which are measured in accordance with DIN ISO 697

According to a narrower definition, aerogels are materials in which the liquid has been removed from the gel under supercritical conditions. Most commonly the liquid is removed with supercritical carbon dioxide. The term "xerogel" as used herein refers to a type of aerogel in which the liquid has been removed from the gel by a process other than supercritical fluid extraction, including drying under sub critical conditions or removal of the liquid from the frozen state by sublimation.

The pores in the aerogels used in the present invention are typically filled with air. They can also be filled with other desired gases. Alternatively, the gases can be removed from the aerogel under vacuum.

The most common aerogel material is silica (SiO₂), which is also preferred according to the invention. However, other materials can be used, including other metal oxides such as alumina (Al₂O₃), carbon, and polymers such as polyimide. According to a preferred embodiment of the invention, the aerogel is synthetic amorphous silica gel (CAS RN 102262-30-6), which optionally can be surface modified, in particular by silation with a silating agent. Such amorphous silica-based aerogels are distinct from other silica materials such as crystalline silica or other amorphous silica forms such as pyrogenic (fumed) silica.

Aerogels can be prepared by methods well known in the art. Briefly, a gel is prepared, e.g. by suspending silicium compounds in a liquid, then fluid is removed by any suitable method that substantially preserves the gel structure and pore size. The method of fluid removal can be supercritical fluid extraction, evaporation of liquid, or freeze-drying. The gel can be cast in particles to match the desired final aerogel particle size. But more typically, a large gel will be formed, the fluid removed from it to form a large aerogel, and then the large aerogel can be broken or otherwise processed into particles of the desired size.

Aerogel production processes result in extremely porous solid particles that are resistant to water (due to their inherent hydrophobicity) and high-shear mixing. The pores of aerogels are typically 1 - 20 nm wide, a factor 1000 smaller than comparable products such as expanded glass or hollow microspheres. The pores in aerogels are so small and numerous that grinding the particles down with a high-shear mixer has an only negligible effect on the insulating properties, while other products will be destroyed. According to the invention, aerogel can be easily grinded down and, e.g., sieved to a large variety of particle sizes distributions to fit the practical needs of a given coating and application.

Practical experiments have shown that aerogel particles can successfully be used according to the invention in a wide variety of particle sizes. The lower endpoint of the particle size range for the aerogel particles used according to the invention is 2 µm, preferably 10 µm or 100µm. The upper endpoint of the particle size range for the aerogel particles used according to the invention is 700 µm. Any of these lower and upper endpoints can be combined to form preferred particle size ranges according to the invention. Accordingly, the aerogel particles of the invention have a mean particle size of from 2 µm up to 700 µm, preferably from 10 µm or 100µm up to 700 µm.

The phosphate-based ceramic coatings comprising porous particles according to the invention were developed to be applicable by spraying. For the majority of spraying equipment used, it is best practice to use aerogel particles with particle sizes of 1.5mm or smaller. Larger particles may lead to stoppages in the spraying nozzle.

The skilled person knows how to produce aerogels. Specific methods of preparing aerogels are, e.g., explained in WO 2008/115812 A2 (Cabot) or EP 0699104 B1 (Hoechst). Aerogels are commercially available from several sources. Suitable aerogels for the purposes of the invention are, for example, those available from Cabot Corp. (Billerica, MA, USA) under the trade names Enova^{®} IC 3100, 3110, 3120 or Aerogel Particles P100, 200 and 300.

Aerogels are excellent thermal insulators with thermal conductivities approximately half that of still air. They minimize conduction because of the tortuous path through the porous aerogel nanostructure. They minimize convection because of the small pore sizes. By way of its porosity, aerogel is one of the lightest materials known to date.

The incorporation of aerogel particles in the phosphate-based ceramic coatings in mixture with porous particles according to the invention results in excellent thermal insulation properties even when only a thin layer of the coating is applied (e.g., 1mm).

### Phosphate-based ceramic coating

The phosphate-based ceramic coatings comprising porous particles according to the invention are made by acid-base reactions between an acidic phosphate, and an alkaline earth metal oxide or hydroxide. The resulting coatings are hard and fire-resistant, and replicate properties of either cement or ceramic, or both. The reaction products are near neutral in pH and may provide refractory-like compositions that are stable at very high temperature, for example, exceeding 1000 °C, e.g., temperatures which most of the commercial organic-based products and even many inorganic produces cannot stand.

Rapidly setting compositions such as phosphate ceramics heretofore have proven difficult to spray coat (and atomize) onto surfaces so as to provide a smooth, paint-like finish. This is not the case for the phosphate-based ceramic coatings according to the invention, which are easily applied by spraying.

The phosphate-based ceramic coatings comprising porous particles according to the invention are capable of being spray-coated, as well as capable of atomization so as to provide a "paint-like" appearance. In fact, it is difficult to distinguish the instant set coatings from a conventional paint coating on a surface. The phosphate-based ceramic coatings comprising porous particles according to the invention can be directly sprayed on surfaces, e.g., wood, metal, concrete surfaces, and other structural surfaces. The instant phosphate-based ceramic coating formulations provide functional, value-added properties at a level not possible from conventional paints and prior art phosphate-based ceramic coatings, such as combined insulation and fire resistance properties.

Basically, the phosphate-based ceramic coating comprising porous particles according to the invention is obtainable by reacting a component mixture A with a component mixture B, wherein
(a) component mixture A comprises water and acidic phosphate; and
(b) component mixture B comprises water and alkaline earth metal oxide and/or hydroxide;
   characterized in that component mixtures A and/or B comprise(s) porous particles which are selected from expanded perlite particles or a mixture of expanded perlite particles and aerogel particles and
   which have a mean particle size of from 2 µm up to 700 µm,
   wherein the phosphate-based ceramic coating comprising porous particles has been sprayed and is in the form of a layer having a layer thickness of from 2 µm up to 5 mm.

Component mixtures A and B according to the invention are suitable for providing, upon combination, via an acid-base reaction a phosphate-based ceramic coating comprising porous particles.

According to one embodiment of the invention, the porous particles are comprised in component mixture B. According to another embodiment of the invention, the porous particles are comprised in component mixture A.

The amount of porous particles selected from expanded perlite particles or a mixture of expanded perlite particles and aerogel particles used depends on the desired properties for the final coating, especially on the desired surface characteristics and insulation properties. Component mixture A or B, or A and B together, can comprise porous particles which are selected from expanded perlite particles or a mixture of expanded perlite particles and aerogel particles in a total amount of from 1, 10, 20, 30, 40, 50 or 60 vol.-% up to 90, 80, or 70 vol.-%, based on the total volume of the component mixtures A and B together. Any of these lower and upper endpoints can be combined to form preferred porous particles contents according to the invention. In particular, the component mixture A or B, or A and B together, can comprise porous particles selected from expanded perlite particles or a mixture of expanded perlite particles and aerogel particles in a total amount of 0,5 to 70 vol.-%, preferably 1 to 60 vol.-%, particularly preferred 50 to 70 vol.-%, based on the total volume of the component mixtures A and B together (i.e. the sum of the volumes of component mixtures A and B). It was surprising to see that such high loading with porous particles which are selected from expanded perlite particles or a mixture of expanded perlite particles and aerogel particles was possible with the phosphate-based ceramic coatings comprising porous particles according to the invention. Usually, it is difficult to maintain porous particles properly dispersed in the coating. This difficulty can be overcome by using the particular phosphate-based ceramic coating comprising porous particles described herein.

The final phosphate-based ceramic coating comprising porous particles of the invention comprises porous particles which are selected from expanded perlite particles or a mixture of expanded perlite particles and aerogel particles preferably in an amount of from 1, 10, 20, 30, 40, 50, 60, and 70 vol.-% up to 98, 95, 90, 80, or 70 vol.-%, based on the total volume of the coating. Any of these lower and upper endpoints can be combined to form preferred porous particles contents according to the invention.

In terms of wt-%, Component mixture A or B, or A and B together, can comprise porous particles which are selected from expanded perlite particles or a mixture of expanded perlite particles and aerogel particles in a total amount of from 0,1, 0,5, 1, 2, 5 wt.-% up to 60, 50, 40, 30, 20, 10, 7,5 or 6 wt.-%, based on the total weight of the component mixtures A and B together. Similarly the final phosphate-based ceramic coating comprising porous particles of the invention comprises porous particles which are selected from expanded perlite particles or a mixture of expanded perlite particles and aerogel particles preferably in an amount of from 0,1, 0,5, 1, 2, 5 wt.-% up to 60, 50, 40, 30, 20, 10, 7,5 or 6 wt.-%, based on the weight of the coating. Again, any of these lower and upper endpoints can be combined to form preferred porous particles contents according to the invention.

The higher the loading with porous particles, the longer the setting times that are usually needed in order to maintain acceptable product qualities. A particular advantage of the phosphate-based ceramic coatings comprising porous particles of the invention is that they work with rapid setting times even when high amounts of porous particles which are selected from expanded perlite particles or a mixture of expanded perlite particles and aerogel particles are contained in the coating applied by spraying. The phosphate-based ceramic coating comprising porous particles according to the invention is optimally formulated such that it can hold the relatively large amount of porous particles which are selected from expanded perlite particles or a mixture of expanded perlite particles and aerogel particles, but at the same time set before the porous particles migrate, for example, down a vertical surface or overhead surface.

Both component mixtures A and B contain water. They can be said to be aqueous or water-based. According to one embodiment, water is the only liquid present in component mixture A and/or B.

The water content is a major determinant of the application by spraying of the coating according to the invention. Preferably, component mixture A or B, or A and B independently of each other, comprises water in an amount of 5 to 80 wt.-%, preferably 20 to 60 wt-%, particularly preferred 15 to 50 wt-% based on the total weight of the component mixture A or B. These water contents result in good application by spraying of the coating. Depending on the properties desired (such as reaction speed or hardness of the coating), however, the water content can be lower as well.

Component mixture A and/or B can be solutions, emulsions, dispersions, pastes, or combinations thereof.

According to a particular embodiment of the invention, the phosphate-based ceramic coating, the component mixture A and/or the component mixture B are substantially inorganic, preferably they contain more than 90, more than 95, more than 98, more than 99, or more than 99,9 wt-% inorganic material, including water, and based on the total weight of the phosphate-based ceramic coating, the component mixture A and/or the component mixture B, respectively.

Component mixtures A and/or B optionally may include one or more additives, such as fillers, surfactants (anionic or cationic, amphoteric, or nonionic), plasticizers, setting agents, rheology modifiers and/or suspending agents, and/or anti-foamers. In particular, component mixtures A and/or B may further comprise a rheology modifer and/or suspending agent in an amount capable of providing shear thinning of component mixture A and/or B and further capable of suspending a high solids content of either the component mixture A and/or B.

Suitable fillers include for example, wollastonite, talc, Class C or F fly ash, kaolin clay, kaolinite, metakaolin, mullite, calcium aluminate minerals, calcium silicate minerals, aluminum silicate minerals, calcium aluminum silicate minerals, or mixtures thereof. Other fillers alone or in combination with the above may be used.

Suitable anionic surfactants include, for example, perfluorooctanoate (PFOA or PFO), perfluorooctanesulfonate (PFOS), sodium dodecyl sulfate (SDS), ammonium lauryl sulfate, alkyl sulfate salts, sodium lauryl ether sulfate (SLES), alkyl benzene sulfonate, and soaps or fatty acid salts. Suitable cationic surfactants include, for example, cetyl trimethylammonium bromide (CTAB), alkyl timethylammonium salt, cetylpyridinium chloride (CPC), polyethoxylated tallow amine (POEA), benzalkonium chloride (BAC), and benzethonium chloride (BZT). Suitable amphoteric surfactants include, for example, dodecyl betaine, cocamidopropyl betaine, and coco ampho glycinate. Suitable nonionic surfactants include, for example, alkyl poly (ethylene oxide), alkylphenol poly (ethylene oxide), poloxamers or poloxamines (copolymer of polyethylene oxide or polypropylene oxide), octyl glucoside, decyl maltoside, cetyl alcohol, oleyl alcohol, and dodecyl dimethylamine oxide. Other surfactants alone or in combination with the above may be used.

Suitable plasticizers include, for example phthalates, trimellitates, aliphatic dibasic esters, phosphates, epoxides, or polyesters. Specific examples of plasticizers include, for example, DOP (di(2-ethylhexyl) phthalate, DINP (di (isononyl) phthalate, TOTM (tris (2-ethylhexyl) trimellitate, TINTM (tris (isononyl) trimellitate, DOA (di (2-ethylhexyl) adipate, DINA (di (isononyl) adipate, DOZ (di (2-ethylhexyl) azelate, and DOS (di(2-ethylhexyl) sebacate. Other plasticizerplasticizers alone or in combination with the above may be used.

Suitable Anti setting agents include, for example, soya-lacithin, aluminum stearate, stearate coated calcium carbonate, modified cater oil or fatty acids, dipentene, pine oil, methyl ethyl ketoxime, di-isobutylene-maleic dispersion, ammonium polyacrylate, modified soya lecithin emulsion, polycaprolactonepolyol- polyethyleneimine block copolymer, polycaprolactonepolyol-toluene diisocynate copolymer, polyhydroxystearic acid, and alkyd based anti-setting agents. Other setting agents alone or in combination with the above may be used.

Suitable rheology modifiers/suspending agents include hydrated magnesium aluminum silicate, lignosulfonates (calcium lignosulfonates, sodium lignosulfonates and the like), salts of sulfonated naphthalene sulfonate condensates, salts of sulfonated melamine sulfonate condensates, beta naphthalene sulfonates, sulfonated melamine formaldehyde condensates, naphthalene sulfonate formaldehyde condensate resins, for example, LOMAR D^{®} dispersant (Cognis Inc., Cincinnati, Ohio), polyaspartates, oligomeric dispersants, polymethacrylate salts, guar gum, diutan gum, welan gum, xanthan gum and/or other agents that function as a rheology modifiers/suspending agent. It has been observed that certain rheology modifiers/suspending agents, for example, DARVAN (sodium polymethacrylate) can provide only limited performance, e.g., providing smooth coatings at only about 15% of Al₂O₃ or other similar high density particles. Thus, the particular choice of rheology modifiers/suspending agent in not predicable for any particular phosphate ceramic formulation.

Suitable anti-foamers include, for example, silicon based anti-foam oil (siloxane with polyether terminal groups), acetylene glycol surfactants, and poly octyl acrylates. Other anti-foamers alone or in combination with the above may be used.

Component mixtures A and/or B may optionally comprise aggregate material present in an amount in at least one of component mixture A and/or B capable of imparting an observable color and/or texture to the coating.

### Component mixture A

Component mixture A of the invention comprises water and acidic phosphate.

According to one embodiment of the invention, component mixture A is acidic, i.e. it has or is adjusted to a pH of below 7, preferably of about 1 to about 6, particularly preferred from about 2 to about 5.

Component mixture A can in particular be an aqueous solution of or comprising acidic phosphate, i.e. phosphoric acid, metal phosphates and/or other acidic phosphates, in particular phosphate salts.

According to a preferred embodiment of the invention, the acidic phosphate in the component mixture A comprises or consists of phosphoric acid, or comprises or consists of phosphoric acid and one or more metal phosphates. The metal phosphate is one or more selected from the group of potassium-, sodium, ammonium-, aluminumand lithium phosphate. Disclosed but not claimed are the metal phosphates aluminum phosphate and zinc phosphate. Particularly good results are achieved when mono-potassium-phosphate is used as acidic phosphate in component mixture A, optionally together with further acidic phosphates.

Preferably, component mixture A comprises acidic phosphate in an amount of 10 to 95 wt.-%, preferably 30 to 90 wt-%, particularly preferred 50 to 85 wt-% based on the total weight of the component mixture A.

According to a particular embodiment of the invention, the acidic phosphate has the chemical formula A^{m}(H₂PO₄)ₘ.nH₂O, where A is hydrogen ion, ammonium cation, metal cation, or mixtures thereof; where m = 1-3, and n = 0-6.

According to another embodiment, component mixture A comprises phosphoric acid, a dihydrogen phosphate salt of formula M^{m}(H₂PO₄)ₘ and its hydrates, or mixtures thereof; where M sodium, potassium, or mixtures thereof, and m is 1-3. Disclosed but not claimed are magnesium, calcium, aluminum or mixtures thereof as M. According to another embodiment, component mixture A comprises at least two of an alkali dihydrogen phosphate M(H₂PO₄) or its hydrate or phosphoric acid. Disclosed but not claimed is component mixture A comprising an alkali earth dihydrogen phosphate M(H₂PO₄)₂ or its hydrate, or a trivalent metal trihydrogen phosphate MH₃(PO₄)₂ or its hydrate. Disclosed but not claimed is component mixture A comprising a metal hydrophosphate represented by the formula M₃(PO₄)₂ and its hydrates, where M is aluminum (III), iron (III), manganese (III), lanthanides selected from lanthanum (III), cerium (III), yttrium (III), scandium (III), and mixtures thereof.

According to another embodiment, component mixture A comprises mono potassium phosphate or its hydrate, in combination with phosphoric acid such that the pH of the solution is between 2-5. Disclosed but not claimed is component mixture A comprising mono potassium phosphate or its hydrate, in combination with aluminum trihydrogen phosphate or its hydrate such that the pH of the solution is between 2-5. According to the invention, A is sodium or potassium, or mixtures thereof. Disclosed but not claimed is A being cesium, iron (II), iron (III), magnesium (II), zinc (II), aluminum (III), bismuth (III), zirconium (IV) or mixtures thereof. Disclosed but not claimed is component mixture A comprising phosphoric acid, alkali metal dihydrogen phosphate MH₂PO₄, alkali earth dihydrogen phosphate M(H₂PO₄)₂ or its hydrate, transition metal trihydrogen phosphate MH₃(PO₄)₂ or its hydrate, or mixtures thereof, in combination with an alkali metal oxide, alkali metal hydroxide, alkali earth metal oxide, or a basic mineral. The acidic phosphate according to the invention can be selected from Na₂KPO₄ or NaK₂PO₄. Disclosed but not claimed as acidic phosphates are MgKPO₄, Mg(ZnPO₄)₂, Mg(K₂PO0₄)₂, Mg₂KPO₄, Mg(ZnPO₄)₂, Mg(K₂PO₄)₂, AlK₃(PO₄)₂, Al₂Mg₃(PO₄)₂, ZrOKPO₄, Mg(ZrOPO₄)₂, Zr(OH)₂KPO₄, or Mg[Zr(OH)₂PO₄)₂]₂.

According to a particular embodiment of the invention, component mixture A additionally comprises one or more selected from the group consisting of Kaolinite (Al₄[(OH)₈|Si₄O₁₀] in particular), Silica (SiO₂), citric acid, saccharides, and Boron-containing compounds, such as Borax (Na₂[B₄O₅(OH)₄]·8H₂O in particular). These were found to retard setting of the coating after spraying which is advantageous for particular applications and manufacturing line set-ups.

### Component mixture B

Component mixture B of the invention comprises water and alkaline earth metal oxide and/or hydroxide. According to certain embodiments of the invention, these are sparsely-soluble, i.e. have limited solubility in water at neutral pH.

According to one embodiment of the invention, component mixture B is alkaline, i.e. it has or is adjusted to a pH of above 7, preferably of about 8 to about 14, particularly preferred from about 9 to about 14.

Very good results are achieved when the alkaline earth metal oxide and/or hydroxide is a magnesium oxide and/or hydroxide, in particular magnesium hydroxide or magnesium brine containing an effective amount of magnesium hydroxide.

According to a preferred embodiment of the invention, the component mixture B comprises alkaline earth metal oxide and/or hydroxide in an amount of 10 to 80 wt.-%, preferably 20 to 60 wt-%, particularly preferred 20 to 40 wt-%, based on the total weight of the component mixture B.

According to a particular embodiment of the invention, component mixture B comprises an alkaline earth metal oxide represented by the formula BO, or a hydroxide represented by the formula B(OH), where B is the alkaline earth metal. Disclosed but not claimed is B being a transition metal. B may be magnesium, calcium, or barium. Disclosed but not claimed is B being sodium, potassium, zinc, aluminum, yttrium, a lanthanide, zirconium, iron, bismuth or manganese. In particular, the alkaline earth metal oxide and/or hydroxide may be an oxide or hydroxide of: magnesium, barium, or calcium, manganese (II), or mixtures thereof.

Component mixture B may additionally comprise wollastonite, talc, fly ash, kaolin clay, kaolinite, metakaolin, mullite, calcium aluminate minerals, calcium silicate minerals, aluminum silicate minerals, calcium aluminum silicate minerals, or mixtures thereof.

### Silicates

According to a preferred embodiment of the invention, component mixture B additionally comprises at least one type of silicate. Suitable silicates include alkali metal, alkaline earth metal and quaternary ammonium silicates or polysilicates and any mixture thereof. Particularly good results are achieved when the component mixture B comprises silicates in an amount of 2 to 60 wt.-%, preferably 5 to 40 wt-%, particularly preferred 10 to 25 wt-% based on the total weight of the component mixture B.

Silicates are often characterized by their weight ratio of silica to metal (or ammonium) oxide. Preferred silicates have the following formula: (i) SiO₂ /M^{x} ₂ O wherein M^{x} is Li, Na, K, or NR4, wherein R is hydrogen or a (C1 -C10) optionally substituted organic group, or (ii) SiO₂ /M^{y} O, wherein M^{y} is an alkaline earth metal, in particular Be, Mg, Ca, Sr or Ba, wherein Ca is particularly preferred. Preferably, such silicates have a weight ratio of silica to metal (or ammonium) oxide of at least about 0.20/1, more preferably, at least about 1/1, and most preferably, at least about 1.6/1. Preferably, such silicates have a weight ratio of silica to metal (or ammonium) oxide of no greater than about 20/1, more preferably, no greater than about 10/1, and most preferably, no greater than about 3.3/1.

Preferably, each R is independently hydrogen or an organic group selected from the group of an alkyl group, an aryl group, an aralkyl group, and an alkaryl group. Preferred alkyl groups are alkyl moieties (i.e., unsubstituted alkyl groups) and alkyl groups containing one or more O, N, or S atoms or hydroxy substitution. More preferably, each R is independently hydrogen or an organic group selected from the group of an allyl moiety, an alkyl group interrupted with one or more O, N, or S atoms, a hydroxyalkyl group, an aryl group, an arallyl group, and an alkaryl group.

Preferred silicates are calcium silicates, sodium silicates and potassium silicates. Particularly good results were achieved when the silicates was selected from calcium silicates, sodium silicates and mixtures thereof.

Particularly suitable silicates are sodium and calcium silicates, in particular Na₂SiO₃ and CaSiO₃.

### Method of manufacture

The invention also provides a method for coating a substrate with a phosphate-based ceramic coating comprising porous particles comprising the steps of
I. Separately providing component mixtures A and B, wherein
   (a) component mixture A comprises water and acidic phosphate; and
   (b) component mixture B comprises water and alkaline earth metal oxides and/or hydroxides;
      and wherein component mixture A and/or B comprise(s) porous particles, which are selected from expanded perlite particles or a mixture of expanded perlite particles and aerogel particles and
      which have a mean particle size of from 2 µm up to 700 µm,
II. Mixing component mixtures A and B
III. Spraying the mixture obtained in step II. onto the substrate,
wherein component mixture A reacts with component mixture B to obtain a layer of phosphate-based ceramic coating comprising porous particles according to the invention.

Each of the component mixtures A and B are produced separately and stored separately, and may be dispensed separately or in combination. The component mixtures ultimately are combined in mixing step II. prior to or during spraying step III. and are allowed to react to form an inorganic phosphate composition. Whereas steps II. and III. preferably are performed sequentially, they can also be performed simultaneously.

Dispensing of the component mixtures A and B may be done using conventional dispensing equipment, such as for example, a dual source extruder, rams, pumps etc. fitted with a suitable spray gun, optionally with an in-line static mixer.

In step III. of the method of the invention, the mixture obtained in step II. is sprayed onto a substrate surface to obtain a layer of phosphate-based ceramic coating comprising porous particles. Preferably the substrate is or comprises a rigid foam and/or a plate-shaped element, i.e. also including plate-shaped foam substrates. According to another embodiment, the substrate is selected from a rigid foam, metal, concrete, wood, a wood-based or lignocellulosic material, an insulaltion material such as glass wool, rock wool or glass fiber and/or a plate-shaped element. "lignocellulosic" as used herein means "comprising lignocellulose".

Besides when it is a plate-shaped element, the substrate can be of any form. In particular, it is possible to directly coat uneven and complex surfaces, e.g. those of glass wool, rock wool or glass fiber. It is also possible to coat bent or tubular substrates, in particular tubes, as well as such having edge, corners or protrusions. In principle there are no limitations as to the shape of the substrate that is to be coated according to the invention. For example, in the case of steel or concrete structures, elements of any shape can serve as substrate and be coated with the phosphate-based ceramic coating according to the invention.

Where the substrate is or comprises a rigid foam, that foam preferably is selected from the group consisting of extruded polystyrene (XPS), expanded polystyrene (EPS), polyurethane (PUR), polyisocyanurate (PIR), phenolic foam, and a combination thereof.

Preferably the substrate is a plate-shaped element. The plate-shaped element can be a foam layer, a sheet insulation material, a sheet construction material, a plasterboard, sheet metal, cement, a magnesium oxide board, a wood-based material, massive and/or a structural insulated panel (SIP).

According to a preferred embodiment, the plate-shaped element comprises lignocellulose particles. "Lignocellulose particles" as used herein means "particles comprising lignocellulose". According to a particularly preferred embodiment, the lignocellulose particles are wood particles. According to a further preferred embodiment, the lignocellulose particles have been pressed in the presence of a binder. Such lignocellulose particles are characteristic of the class of materials known by the skilled person as wood-based material. "wood-based material" as used herein especially means materials comprising wood chips, wood fibers and/or wood strands, in particular such that have been pressed in the presence of a binder.

According to yet another preferred embodiment, the plate-shaped element comprises or consists of one or more layers of wood-based materials or massive wood. The wood-based material preferably comprises wood chips, wood fibers and/or wood strands.

According to a particularly preferred embodiment, the wood-based material comprises or consists of chipboard, oriented strand board, fiberboard, plywood, wafer board, and/or veneer. In particular, the plate-shaped element can be a chipboard, oriented strand board, fiberboard, plywood, wafer board, and/or veneer. According to certain embodiments said plate-shaped element represents the surface board of a structural insulated panel (SIP).

A particular advantage of the phosphate-based ceramic coatings comprising porous particles prepared according to the invention is that they can be applied by spraying in particularly well-defined, even and thin layers. Practical experiments have shown that the coating of the invention can be applied by spraying in layers of less than 0,3 mm. According to an embodiment of the invention, the layer of phosphate-based ceramic coating comprising porous particles has a layer thickness of from 0,1 or 0,25 mm to 5 mm, preferably 0,5 mm to 3 mm or from 0,75 mm to 1,5 mm. However, depending on the particle size of the inorganic components used in component mixtures A and B, the layer thickness of the coating can be much thinner. For example, when using very fine grade (only few µm in diameter) acidic phosphate, alkaline earth metal oxide/hydroxide and porous particles as starting materials, very thin spray-coatings can be obtained with layer thicknesses as low as 2, 5, 10, 50, 100, or 250 µm. This is in stark contrast to regular, coarse cement, which usually can only be sprayed in layers of about 5 mm thickness. In certain embodiments, the layer thickness is from 2 µm, 5 µm, 10 µm, 50 µm, 0,1 mm, 0,25 mm, 0,5 mm or 0,75 mm and up to 5 mm, 3 mm, or 1,5 mm. Any of these lower and upper endpoints can be combined to form preferred layer thicknesses according to the invention

### Laminate

Whereas the porous particles present in the phosphate-based ceramic coatings comprising porous particles according to the invention result in superior insulation properties, Applicant has observed that in some cases, especially when aerogel particles are used in mixtures with expanded perlite, they may impair or reduce the fire resistance properties of the phosphate-based ceramic coating. This is surprising because in the prior art, inorganic porous particles such as aerogel particles have been described as particularly resistant to high temperatures and fire.

To obtain optimal fire resistance properties and at the same time maintain the high insulation properties of the inventive coating, the present invention in a further aspect provides for a laminate including a protective layer that is applied on top of the layer of phosphate-based ceramic coating comprising porous particles according to the invention. The application of the protective layer can be performed as described above for the phosphate-based ceramic coating comprising porous particles of the invention, i.e. in particular it can be applied by spray coating.

This can be done, e.g., in the method of the invention which may be extended to contain an additional step IV. of applying a protective layer onto the layer of phosphate-based ceramic coating comprising the porous particles. In this way, a laminate of two layers is formed. This laminate of the invention can optionally contain further layers in between or on top of these two layers.

The protective coating can be any coating that protects the underlying layer of phosphate-based ceramic coating and/or the porous particles comprised therein from external influences such as heat, fire, light, shear, scratches, mechanical forces, environmental and weather influences and/or corrosion. In a preferred embodiment, the protective coating has fire-resistance properties, in particular a fire resistance that is superior to that of the layer of phosphate-based ceramic coating comprising porous particles alone. The protective layer may be made of an inorganic or organic (e.g. polymer) material, or a combination of both. Preferably, the protective layer is substantially inorganic in nature.

The protective layer can be of the same or a different material than the layer of phosphate-based ceramic coating comprising porous particles according to the invention. According to a preferred embodiment, the protective layer comprises or consists of a phosphate-based ceramic coating as described above for the phosphate-based ceramic coating comprising porous particles according to the invention. The two layers can be based on the same or a different phosphate-based ceramic coating comprising porous particles. In a preferred embodiment, the protective layer does not contain porous particles. If the protective layer is a phosphate-based ceramic coating, it can be applied by way of the three steps 1. to III. described above in connection with applying the phosphate-based ceramic coating comprising porous particles of the invention onto a substrate.

As described above, the laminate provided by the invention comprises
(i) a protective layer; and
(ii) a layer of phosphate-based ceramic coating comprising porous particles.

Layer (ii) is the phosphate-based ceramic coating comprising porous particles of the invention described in detail above.

In a preferred embodiment, protective layer (i) comprises or consists of a phosphate-based ceramic coating, which can be as defined for the phosphate-based ceramic coating comprising porous particles of the invention described in detail. Disclosed but not claimed is the protective layer lacking porous particles.

According to one embodiment of the invention, layer (i) has a layer thickness of from 0,25 mm to 5 mm, preferably 0,5 mm to 3 mm or from 0,75 mm to 1,5 mm. Layer (ii) may independently have a layer thickness of from 0,25 mm to 5 mm, preferably 0,5 mm to 3 mm or from 0,75 mm to 1,5 mm. Both layers (i) and (ii) can independently of one another also have the layer thicknesses described above in connection with the phosphate-based ceramic coating comprising porous particles according to the invention. In particular, layer thicknesses of 2 µm, 5 µm, 10 µm, 50 µm, 0,1 mm, 0,25 mm, 0,5 mm or 0,75 mm up to 5 mm, 3 mm, or 1,5 mm are possible, wherein each of these lower and upper endpoints can be combined.

The laminate of the invention may optionally comprise further layers, in particular a substrate layer (iii) and/or a layer (iv) comprising an insulation material. Preferably, layer (ii) is in between layers (i) and layer (iii) and/or layer (iv), in particular in between layers (i) and (iii); in between layers (i) and (iv); or in between layer (i) and layers (iii) and (iv).

Preferably, substrate layer (iii) is or comprises any "substrate" described above in connection with the method of the invention. In particular, substrate layer (iii) can be a plate-shaped element as described above. Layer (iv) can consist of or comprise a rigid foam, but also of other insulaltion materials such as glass wool, rock wool or glass fiber. In case a foam is used, it may be selected from the group consisting of extruded polystyrene (XPS), expanded polystyrene (EPS), polyurethane (PUR), polyisocyanurate (PIR), phenolic foam, and a combination thereof.

### Products and Uses

The invention also provides products comprising the phosphate-based ceramic coating comprising porous particles according to the invention or comprising the laminate according to the invention. In a particular aspect, the invention provides products obtainable by the method of the invention described above for coating a substrate with a phosphate-based ceramic coating comprising porous particles by spraying.

According to one embodiment, a product is provided comprising at least one substrate layer and/or a layer comprising an insulation material. These layers, or at least one of them, are coated with a layer of phosphate-based ceramic coating comprising porous particles of the invention described above or with a laminate of the invention as described in detail above.

In a particularly preferred embodiment of the invention, the product is a building element, in particular, an insulation panel, a roof tile, a fire door and/or a building element for roofs, ceilings and/or facades. In another embodiment the product is or comprises a coated plate-shape element and/or rigid foam as described in detail above.

A particular preferred embodiment is a structural insulation panel (SIP) as known from the prior art, but wherein one or both outer surfaces of the SIP are coated with a layer of phosphate-based ceramic coating comprising porous particles according to the invention or with a laminate according to the invention. A particularly preferred layer structure for such a coated SIP according to the invention is the following: (i) phosphate-based ceramic coating comprising porous particles or a laminate according to the invention - (ii) board - (iii) foam - (iv) board. The board can be any plate-shaped element as described above. Similarly the foam can be any foam type described above. Each of the layers may optionally contain further components and/or there may be additional layers in between the layers stated. In a particular embodiment, a layer of phosphate-based ceramic coating comprising porous particles or a laminate according to the invention is used as adhesive between at least one surface of the foam and one of the boards of a SIP.

The phosphate-based ceramic coating comprising porous particles, the laminate, and the product according to the invention are characterized by particularly high insulation factors. In particular, the insulation factor is generally higher than that of the respective phosphate-based ceramic coating without porous particles alone. In a preferred embodiment, the phosphate-based ceramic coating comprising porous particles, the laminate, and the product according to the invention are characterized by a fire resistance of class C or B, as determined by EN 13501.

According to certain embodiments of the invention, the surface of the phosphate-based ceramic coating, and/or, if applicable, the surface of the protective layer is characterized by one or more of the following features: It
i. is smooth and/or even,
ii. is substantially white or off-white,
iii. is scratch proof,
iv. can be painted and/or plastered without further treatment,
v. can be sawn, drilled, and processed in the same manner and with the same tools as surfaces of structural insulated panels known in the art,
vi. has an improved E-modulus over comparable coatings without porous particles,
vii. has an improved tensile strength over comparable coatings without porous particles and/or
viii. has an improved fire resistance over comparable coatings without porous particles.

The phosphate-based ceramic coatings comprising porous particles, laminates and products according to the invention described herein are particularly useful as fire protection material, insulation and/or anti-corrosion material, or to improve the fire protection, fire resistance, anti-corrosion and/or insulation properties of an underlying base or substrate material. Insulation as used herein can refer to heat-insulation and/or sound-insulation, preferably, it refers to heat-insulation. In addition the phosphate-based ceramic coatings comprising porous particles and laminates according to the invention described herein are useful for protecting the underlying layer of substrate from external influences such as heat, fire, light, shear, scratches, mechanical forces, environmental and weather influences and/or corrosion. They also can be used as an anti-deterioration or even anti-fungal (e.g., anti-mold or anti-mildew) coating, especially if the underlying substrate is a lignocellulosic, wood- or wood-based product.

The invention also includes the use of porous particles in a phosphate-based ceramic coating in order to increase the flexibilty and/or insulation properties of that coating and/or to improve the resistance of that coating against fire, heat, light, shear, scratches, mechanical forces, environmental and weather influences, corrosion and/or fungal growth.

The phosphate-based ceramic coatings comprising porous particles and laminates according to the invention are also particularly useful for the manufacture of fire doors. Accordingly, the coating or laminate may be applied onto the surface of such a door or in between layers of material, in particular wood or wood-based material, that are comprised in the fire door. Fire doors comprising the inventive coating or laminate show improved fire resistance and insulation properties.

In addition, due to the almost immediate setting properties of the phosphate-based ceramic coatings comprising porous particles of the invention, they and the laminate comprising them can effectively be used as adhesive, in particular as "instant adhesive". For example, in the manufacture of a multi-layer building element comprising a plate-shaped element and/or a rigid foam, the phosphate-based ceramic coating comprising porous particles and laminate according to the invention can be used to adhesively attach individual layers to one another. Similarly, the inventive coating or laminate may adhesively attach different layers used for the manufacture of a door, in particular a fire door. In these embodiments, the function of an adhesive can be combined with the additional insulation properties provided by the porous particles present in the phosphate-based ceramic coating comprising porous particles according to the invention. Similarly, the phosphate-based ceramic coating and laminate according to the invention can also be used to adhesively attach an entire building element, in particular one that comprises or consists of a plate-shaped element and/or a rigid foam to a separate surface, e.g. to that of a roof, ceiling and/or facade.

## Claims

1. Phosphate-based ceramic coating comprising porous particles obtainable by reacting a component mixture A with a component mixture B, wherein
(a) component mixture A comprises water and acidic phosphate; and
(b) component mixture B comprises water and alkaline earth metal oxide and/or hydroxide;
**characterized in that** component mixtures A and/or B comprise(s) porous particles which are selected from expanded perlite particles or a mixture of expanded perlite particles and aerogel particles and
which have a mean particle size of from 2 µm up to 700 µm,
wherein the phosphate-based ceramic coating comprising porous particles has been sprayed and is in the form of a layer having a layer thickness of from 2 µm up to 5 mm.

2. Phosphate-based ceramic coating comprising porous particles according to claim 1, wherein
- the alkaline earth metal oxide and/or hydroxide is magnesium hydroxide; and/or
- the component mixture B comprises alkaline earth metal oxide and/or hydroxide in an amount of 10 to 80 wt.-%, preferably 20 to 60 wt-%, particularly preferred 20 to 40 wt-%, based on the total weight of the component mixture B; and/or
- the component mixture A or B, or A and B independently of each other, comprises water in an amount of 5 to 80 wt.-%, preferably 20 to 60 wt-%, particularly preferred 15 to 50 wt-%, based on the total weight of the component mixture A or B; and/or
- the acidic phosphate in the component mixture A comprises or consists of phosphoric acid, or comprises or consists of phosphoric acid and one or more metal phosphates, in particular wherein the metal phosphate is selected from the group consisting of potassium-, sodium, ammonium-, and lithium phosphate, wherein mono-potassium-phosphate is particularly preferred; and/or wherein
- the component mixture A comprises acidic phosphate in an amount of 10 to 95 wt.-%, preferably 30 to 90 wt-%, particularly preferred 50 to 85 wt-%, based on the total weight of the component mixture A.

3. Phosphate-based ceramic coating comprising porous particles according to any one of the preceding claims, wherein the component mixture A or B, or A and B together, comprise porous particles which are selected from expanded perlite particles or a mixture of expanded perlite particles and aerogel particles, in a total amount of from 1, 10, 20, 30, 40, 50 or 60 vol.-% up to 90, 80, or 70 vol.-%, based on the total volume of the component mixtures A and B together.

4. Phosphate-based ceramic coating comprising porous particles according to any one of the preceding claims, wherein the mean particle size is from 10 µm or 100 µm up to 500 µm.

5. Phosphate-based ceramic coating comprising porous particles according to any one of the preceding claims, wherein the layer thickness is from 5 µm, 10 µm, 50 µm, 0,1 mm, 0,25 mm, 0,5 mm or 0,75 mm up to 3 mm or 1,5 mm.

6. Method for coating a substrate with a phosphate-based ceramic coating comprising porous particles according to claims 1 to 5 comprising the steps of
I. Separately providing component mixtures A and B, wherein
(a) component mixture A comprises water and acidic phosphate; and
(b) component mixture B comprises water and alkaline earth metal oxides and/or hydroxides;
and wherein component mixture A and/or B comprise(s) porous particles which are selected from expanded perlite particles or a mixture of expanded perlite particles and aerogel particles and
which have a mean particle size of from 2 µm up to 700 µm,
II. Mixing component mixtures A and B;
III. Spraying the mixture obtained in step II. onto the substrate,
wherein component mixture A reacts with component mixture B to obtain a layer of phosphate-based ceramic coating comprising porous particles according to claims 1 to 5.

7. Method according to claim 6, wherein the substrate is a rigid foam, metal, concrete, wood, a wood-based or lignocellulosic material, an insulation material such as glass wool, rock wool or glass fiber and/or a plate-shaped element, wherein, optionally, said plate-shaped element is a sheet insulation material, a sheet construction material, a plasterboard, sheet metal, concrete, a magnesium oxide board and/or a structural insulated panel.

8. Method according to claim 6 or 7, comprising an additional step IV. of applying a protective layer onto the layer of phosphate-based ceramic coating comprising porous particles, wherein, optionally, the protective layer comprises or consists of a phosphate-based ceramic coating, which can be as defined in any one claims 1 to 5.

9. Laminate comprising
(i) a protective layer; and
(ii) a layer of phosphate-based ceramic coating comprising porous particles according to any one claims 1 to 5.

10. Laminate according to claim 9, wherein the protective layer (i) comprises or consists of a phosphate-based ceramic coating, which can be as defined in any one claims 1 to 5; and/or wherein layers (i) and (ii) independently of each other have a layer thickness of from 2 µm, 5 µm, 10 µm, 50 µm, 0,1 mm, 0,25 mm, 0,5 mm or 0,75 mm and up to 5 mm, 3 mm or 1,5 mm.

11. Laminate according to any one of claims 9 or 10 comprising a further substrate layer (iii) and/or a layer (iv) comprising an insulation material, wherein, optionally
- the substrate layer (iii) is or comprises one of the substrates recited in method claim 7; and/or
- layer (iv) is or comprises a rigid foam, in particular one selected from the group consisting of extruded polystyrene (XPS), expanded polystyrene (EPS), polyurethane (PUR), polyisocyanurate (PIR), phenolic foam, and a combination thereof.

12. Product selected from insulation panel, roof tile, fire door and/or a building element for roofs, ceilings and/or facades, comprising at least one substrate layer and/or a layer comprising an insulation material, wherein these layers, or at least one of them, are coated with a layer of phosphate-based ceramic coating comprising porous particles according to any one claims 1 to 5 or with a laminate as defined in any one of claims 9 to 11, wherein, optionally, the substrate layer and/or a layer comprising an insulation material are as defined in claim 11.

13. Use of a phosphate-based ceramic coating comprising porous particles according to any one of claims 1 to 5, a laminate according to claims 9 or 10, or a product according to claim 12 as fire protection material, insulation and/or anti-corrosion or anti-deterioration material, or to improve the fire protection, fire resistance, anti-corrosion, anti-deterioration and/or insulation properties of an underlying base or substrate material; or as adhesive.

## Patentansprüche

1. Keramische Beschichtung auf Phosphatbasis, die poröse Teilchen umfasst, die durch Reaktion einer Komponentenmischung A mit einer Komponentenmischung B erhältlich sind, wobei
(a) Komponentengemisch A Wasser und saures Phosphat enthält; und
(b) Komponentengemisch B Wasser und Erdalkalimetalloxid und/oder -hydroxid enthält;
**dadurch gekennzeichnet, dass** die Komponentenmischungen A und/oder B poröse Teilchen umfassen, die ausgewählt sind aus expandierten Perlitteilchen oder einer Mischung aus expandierten Perlitteilchen und Aerogel-Partikel und
die eine mittlere Partikelgröße von 2 µm bis zu 700 µm aufweisen,
wobei die keramische Beschichtung auf Phosphatbasis, die poröse Teilchen enthält, gesprüht wurde und in Form einer Schicht mit einer Schichtdicke von 2 µm bis zu 5 mm vorliegt.

2. Keramische Beschichtung auf Phosphatbasis mit porösen Teilchen nach Anspruch 1, wobei
- das Erdalkalimetalloxid und/oder -hydroxid ist Magnesiumhydroxid; und/oder
- die Komponentenmischung B enthält Erdalkalimetalloxid und/oder -hydroxid in einer Menge von 10 bis 80 Gew.-%, vorzugsweise 20 bis 60 Gew.-%, besonders bevorzugt 20 bis 40 Gew.-%, bezogen auf das Gesamtgewicht der Komponentenmischung B; und/oder
- das Komponentengemisch A oder B, oder A und B unabhängig voneinander, Wasser in einer Menge von 5 bis 80 Gew.-%, vorzugsweise 20 bis 60 Gew.-%, besonders bevorzugt 15 bis 50 Gew.-%, bezogen auf das Gesamtgewicht des Komponentengemisches A oder B, enthält; und/oder
- das saure Phosphat in der Komponentenmischung A Phosphorsäure umfasst oder daraus besteht, oder Phosphorsäure und ein oder mehrere Metallphosphate umfasst oder daraus besteht, insbesondere wobei das Metallphosphat aus der Gruppe ausgewählt ist, die aus Kalium-, Natrium-, Ammonium- und Lithiumphosphat besteht, wobei Monokaliumphosphat besonders bevorzugt ist; und/oder wobei
- die Komponentenmischung A enthält saures Phosphat in einer Menge von 10 bis 95 Gew.-%, vorzugsweise 30 bis 90 Gew.-%, besonders bevorzugt 50 bis 85 Gew.-%, bezogen auf das Gesamtgewicht der Komponentenmischung A.

3. Keramische Beschichtung auf Phosphatbasis, die poröse Teilchen enthält, nach einem der vorhergehenden Ansprüche, wobei die Komponentenmischung A oder B oder A und B zusammen poröse Teilchen umfassen, die aus expandierten Perlitteilchen oder einer Mischung aus expandierten Perlitteilchen und Aerogel-Partikeln ausgewählt sind, in einer Gesamtmenge von 1, 10, 20, 30, 40, 50 oder 60 Vol.-% bis zu 90, 80 oder 70 Vol.-%, bezogen auf das Gesamtvolumen der Komponentenmischungen A und B zusammen.

4. Keramische Beschichtung auf Phosphatbasis, die poröse Teilchen umfasst, nach einem der vorhergehenden Ansprüche, wobei die mittlere Teilchengröße von 10 µm oder 100 µm bis zu 500 µm beträgt.

5. Keramische Beschichtung auf Phosphatbasis, die poröse Teilchen umfasst, nach einem der vorhergehenden Ansprüche, wobei die Schichtdicke von 5 µm, 10 µm, 50 µm, 0,1 mm, 0,25 mm, 0,5 mm oder 0,75 mm bis zu 3 mm oder 1,5 mm beträgt.

6. Verfahren zur Beschichtung eines Substrats mit einer keramischen Beschichtung auf Phosphatbasis, die poröse Teilchen umfasst, nach einem der Ansprüche 1 bis 5, das die folgenden Schritte umfasst
I. Getrennte Bereitstellung von Komponentengemischen A und B, wobei
(a) Komponentengemisch A Wasser und saures Phosphat enthält; und
(b) Komponentengemisch B Wasser und Erdalkalimetalloxide und/oder - hydroxide enthält;
und wobei die Komponentenmischung A und/oder B poröse Teilchen umfasst (umfassen), die aus expandierten Perlitteilchen oder einer Mischung aus expandierten Perlitteilchen und Aerogel-Partikeln ausgewählt sind, und
die eine mittlere Partikelgröße von 2 µm bis 700 µm aufweisen,
II. Mischen der Komponentengemische A und B;
III. Aufsprühen der in Schritt II. erhaltenen Mischung auf das Substrat,
wobei die Komponentenmischung A mit der Komponentenmischung B reagiert, um eine Schicht einer keramischen Beschichtung auf Phosphatbasis zu erhalten, die poröse Teilchen umfasst, gemäß den Ansprüchen 1 bis 5.

7. Verfahren nach Anspruch 6, wobei das Substrat ein Hartschaum, Metall, Beton, Holz, ein Holzwerkstoff oder Lignozellulosematerial, ein Dämmstoff wie Glaswolle, Steinwolle oder Glasfaser und/oder ein plattenförmiges Element ist, wobei das plattenförmige Element gegebenenfalls ein plattenförmiges Dämmmaterial, ein plattenförmiges Baumaterial, eine Gipskartonplatte, ein Metallblech, Beton, eine Magnesiumoxidplatte und/oder eine Strukturdämmplatte ist.

8. Verfahren nach Anspruch 6 oder 7, umfassend einen zusätzlichen Schritt IV. des Aufbringens einer Schutzschicht auf die Schicht der keramischen Beschichtung auf Phosphatbasis, die poröse Teilchen umfasst, wobei die Schutzschicht gegebenenfalls eine keramische Beschichtung auf Phosphatbasis umfasst oder daraus besteht, die wie in einem der Ansprüche 1 bis 5 definiert sein kann.

9. Laminat, bestehend aus
(i) einer Schutzschicht; und
(ii) einer Schicht aus einer keramischen Beschichtung auf Phosphatbasis, die poröse Teilchen enthält, nach einem der Ansprüche 1 bis 5.

10. Laminat nach Anspruch 9, wobei die Schutzschicht (i) eine keramische Beschichtung auf Phosphatbasis umfasst oder daraus besteht, die wie in einem der Ansprüche 1 bis 5 definiert sein kann; und/oder wobei die Schichten (i) und (ii) unabhängig voneinander eine Schichtdicke von 2 µm, 5 µm, 10 µm, 50 µm, 0,1 mm, 0,25 mm, 0,5 mm oder 0,75 mm und bis zu 5 mm, 3 mm oder 1,5 mm aufweisen.

11. Laminat nach einem der Ansprüche 9 oder 10, das eine weitere Substratschicht (iii) und/oder eine Schicht (iv) mit einem Isoliermaterial umfasst, wobei gegebenenfalls
- die Substratschicht (iii) eines der in Verfahrensanspruch 7 genannten Substrate ist oder umfasst; und/oder
- Schicht (iv) ein Hartschaum ist oder umfasst, der insbesondere aus der Gruppe ausgewählt ist, die aus extrudiertem Polystyrol (XPS), expandiertem Polystyrol (EPS), Polyurethan (PUR), Polyisocyanurat (PIR), Phenolschaum und einer Kombination davon besteht.

12. Produkt, ausgewählt aus Dämmplatte, Dachziegel, Brandschutztür und/oder einem Bauelement für Dächer, Decken und/oder Fassaden, bestehend aus mindestens einer Substratschicht und/oder einer Schicht mit einem Isoliermaterial, wobei diese Schichten oder mindestens eine von ihnen mit einer Schicht aus einer keramischen Beschichtung auf Phosphatbasis, die poröse Teilchen umfasst, gemäß einem der Ansprüche 1 bis 5, oder mit einem Laminat gemäß einem der Ansprüche 9 bis 11 beschichtet sind, wobei gegebenenfalls die Substratschicht und/oder eine Schicht, die ein Isoliermaterial umfasst, gemäß Anspruch 11 definiert sind.

13. Verwendung einer keramischen Beschichtung auf Phosphatbasis mit porösen Teilchen nach einem der Ansprüche 1 bis 5, eines Laminats nach Anspruch 9 oder 10 oder eines Produkts nach Anspruch 12 als Brandschutzmaterial, Isoliermaterial und/oder Korrosionsschutz- oder Alterungsschutzmaterial oder zur Verbesserung des Brandschutzes, der Feuerbeständigkeit, des Korrosionsschutzes, des Alterungsschutzes und/oder der Isoliereigenschaften eines darunterliegenden Basis- oder Substratmaterials oder als Klebstoff.

## Revendications

1. Revêtement céramique à base de phosphate comprenant des particules poreuses pouvant être obtenues en faisant réagir un mélange de composants A avec un mélange de composants B, dans lequel
(a) le mélange de composants A comprend de l'eau et un phosphate acide; et
(b) le mélange de composants B comprend de l'eau et un oxyde et/ou un hydroxyde de métal alcalino-terreux;
**caractérisé en ce que** les mélanges de composants A et/ou B comprennent des particules poreuses qui sont choisies parmi les particules de perlite expansée ou un mélange de particules de perlite expansée et de particules d'aérogel et
dont la taille moyenne des particules est comprise entre 2 µm et 700 µm,
dans lequel le revêtement céramique à base de phosphate comprenant des particules poreuses a été pulvérisé et se présente sous la forme d'une couche ayant une épaisseur de couche de 2 µm à 5 mm.

2. Revêtement céramique à base de phosphate comprenant des particules poreuses selon la revendication 1, dans lequel
- l'oxyde et/ou l'hydroxyde de métal alcalino-terreux est l'hydroxyde de magnésium; et/ou
- le mélange de composants B comprend un oxyde et/ou un hydroxyde de métal alcalino-terreux en une quantité de 10 à 80 % en poids, de préférence de 20 à 60 % en poids, de manière particulièrement préférée de 20 à 40 % en poids, par rapport au poids total du mélange de composants B; et/ou
- le mélange de composants A ou B, ou A et B indépendamment l'un de l'autre, comprend de l'eau en une quantité de 5 à 80 % en poids, de préférence de 20 à 60 % en poids, de manière particulièrement préférée de 15 à 50 % en poids, par rapport au poids total du mélange de composants A ou B; et/ou
- le phosphate acide dans le mélange de composants A comprend ou consiste en acide phosphorique, ou comprend ou consiste en acide phosphorique et un ou plusieurs phosphates métalliques, en particulier dans lequel le phosphate métallique est choisi dans le groupe constitué par le phosphate de potassium, de sodium, d'ammonium et de lithium, le phosphate mono-potassique étant particulièrement préféré; et/ou dans lequel
- le mélange de composants A comprend un phosphate acide en une quantité de 10 à 95 % en poids, de préférence de 30 à 90 % en poids, de manière particulièrement préférée de 50 à 85 % en poids, par rapport au poids total du mélange de composants A.

3. Revêtement céramique à base de phosphate comprenant des particules poreuses selon l'une quelconque des revendications précédentes, dans lequel le mélange de composants A ou B, ou A et B ensemble, comprend des particules poreuses qui sont choisies parmi des particules de perlite expansée ou un mélange de particules de perlite expansée et de particules d'aérogel, en une quantité totale de 1, 10, 20, 30, 40, 50 ou 60 % en volume jusqu'à 90, 80 ou 70 % en volume, par rapport au volume total des mélanges de composants A et B ensemble.

4. Revêtement céramique à base de phosphate comprenant des particules poreuses selon l'une quelconque des revendications précédentes, dans lequel la taille moyenne des particules est comprise entre 10 µm ou 100 µm et 500 µm.

5. Revêtement céramique à base de phosphate comprenant des particules poreuses selon l'une quelconque des revendications précédentes, dans lequel l'épaisseur de la couche est de 5 µm, 10 µm, 50 µm, 0,1 mm, 0,25 mm, 0,5 mm ou 0,75 mm jusqu'à 3 mm ou 1,5 mm.

6. Procédé de revêtement d'un substrat avec un revêtement céramique à base de phosphate comprenant des particules poreuses selon les revendications 1 à 5, comprenant les étapes suivantes
I. Fournir séparément les mélanges de composants A et B, dans lesquels
(a) le mélange de composants A comprend de l'eau et un phosphate acide; et
(b) le mélange de composants B comprend de l'eau et des oxydes et/ou hydroxydes de métaux alcalino-terreux;
et dans lequel le mélange de composants A et/ou B comprend des particules poreuses, qui sont choisis parmi des particules de perlite expansée ou un mélange de particules de perlite expansée et de particules d'aérogel et
dont la taille moyenne des particules est de 2 µm jusqu'à 700 µm,
II. Mélange des mélanges de composants A et B;
III. Pulvérisation du mélange obtenu à l'étape II. sur le substrat,
dans laquelle le mélange de composants A réagit avec le mélange de composants B pour obtenir une couche de revêtement céramique à base de phosphate comprenant des particules poreuses selon les revendications 1 à 5.

7. Procédé selon la revendication 6, dans lequel le substrat est une mousse rigide, du métal, du béton, du bois, un matériau à base de bois ou lignocellulosique, un matériau d'isolation tel que la laine de verre, la laine de roche ou la fibre de verre et/ou un élément en forme de plaque, dans lequel, facultativement, ledit élément en forme de plaque est un matériau d'isolation en feuille, un matériau de construction en feuille, une plaque de plâtre, une feuille de métal, du béton, une plaque d'oxyde de magnésium et/ou un panneau structurel isolé.

8. Procédé selon la revendication 6 ou 7, comprenant une étape supplémentaire IV. d'application d'une couche protectrice sur la couche de revêtement céramique à base de phosphate comprenant des particules poreuses, dans lequel, facultativement, la couche protectrice comprend ou consiste en un revêtement céramique à base de phosphate, qui peut être tel que défini dans l'une quelconque des revendications 1 à 5.

9. Stratifié comprenant
(i) une couche protectrice; et
(ii) une couche de revêtement céramique à base de phosphate comprenant des particules poreuses selon l'une quelconque des revendications 1 à 5.

10. Stratifié selon la revendication 9, dans lequel la couche protectrice (i) comprend ou consiste en un revêtement céramique à base de phosphate, qui peut être tel que défini dans l'une quelconque des revendications 1 à 5; et/ou dans lequel les couches (i) et (ii) ont indépendamment l'une de l'autre une épaisseur de couche de 2 µm, 5 µm, 10 µm, 50 µm, 0,1 mm, 0,25 mm, 0,5 mm ou 0,75 mm jusqu'à 5 mm, 3 mm ou 1,5 mm.

11. Stratifié selon l'une quelconque des revendications 9 ou 10 comprenant une autre couche de substrat (iii) et/ou une couche (iv) comprenant un matériau isolant, dans lequel, facultativement
- la couche de substrat (iii) est ou comprend l'un des substrats cités dans la revendication de méthode 7; et/ou
- la couche (iv) est ou comprend une mousse rigide, en particulier une mousse choisie dans le groupe constitué par le polystyrène extrudé (XPS), le polystyrène expansé (EPS), le polyuréthane (PUR), le polyisocyanurate (PIR), la mousse phénolique et une combinaison de ceux-ci.

12. Produit choisi parmi un panneau d'isolation, une tuile, une porte coupe-feu et/ou un élément de construction pour toits, plafonds et/ou façades, comprenant
au moins une couche de substrat et/ou une couche comprenant un matériau isolant,
dans lequel ces couches, ou au moins l'une d'entre elles, sont revêtues d'une couche de revêtement céramique à base de phosphate comprenant des particules poreuses selon l'une quelconque des revendications 1 à 5 ou d'un stratifié tel que défini dans l'une quelconque des revendications 9 à 11, dans lequel, facultativement, la couche de substrat et/ou une couche comprenant un matériau isolant sont telles que définies dans la revendication 11.

13. Utilisation d'un revêtement céramique à base de phosphate comprenant des particules poreuses selon l'une quelconque des revendications 1 à 5, d'un stratifié selon les revendications 9 ou 10, ou d'un produit selon la revendication 12 comme matériau de protection contre le feu, matériau d'isolation et/ou matériau anti-corrosion ou anti-détérioration, ou pour améliorer les propriétés de protection contre le feu, de résistance au feu, d'anti-corrosion, d'anti-détérioration et/ou d'isolation d'un matériau de base ou de substrat sous-jacent; ou comme adhésif.
